# EUROPEAN PATENT SPECIFICATION

(11) **EP 4 044 463 B1**
(45) Date of publication and mention of the grant of the patent: **25.03.2026**
(21) Application number: 20884032.2
(22) Date of filing: 06.11.2020
(51) Int. Cl.: H04L 5/00, H04L 5/14, H04B 17/345, H04W 92/20

(54) **SIGNAL TRANSMISSION AND DETECTION METHOD AND RELATED DEVICE**
SIGNALÜBERTRAGUNGS- UND -DETEKTIONSVERFAHREN UND ZUGEHÖRIGE VORRICHTUNG
PROCÉDÉ DE DÉTECTION ET DE TRANSMISSION DE SIGNAUX ET DISPOSITIF ASSOCIÉ

(30) Priority: 07.11.2019 CN 201911083114
(43) Date of publication of application: 17.08.2022
(73) Proprietor: Huawei Technologies Co., Ltd., Longgang District Shenzhen, Guangdong 518129 (CN)
(72) Inventor: ZHAO, Wei, Shenzhen, Guangdong 518129 (CN); CHUAI, Jianshun, Shenzhen, Guangdong 518129 (CN); XIE, Bo, Shenzhen, Guangdong 518129 (CN)
(74) Representative: Goddar, Heinz J.
(86) International application number: PCT/CN2020/126952
(87) International publication number: WO 2021/088949

(56) References cited:
- CN-A- 109 040 947
- US-A1- 2012 314 598
- CATT: "Interference management for dynamic TDD and flexible duplex", vol. RAN WG1, no. Lisbon, Portugal; 20161010 - 20161014, 9 October 2016 (2016-10-09), XP051148845, Retrieved from the Internet <URL:http://www.3gpp.org/ftp/Meetings_3GPP_SYNC/RAN1/Docs/> [retrieved on 20161009]
- CATT: "Interference management for dynamic TDD and flexible duplex", vol. RAN WG1, no. Athens, Greece; 20170213 - 20170217, 12 February 2017 (2017-02-12), XP051209274, Retrieved from the Internet <URL:http://www.3gpp.org/ftp/Meetings_3GPP_SYNC/RAN1/Docs/> [retrieved on 20170212]
- CMCC: "Discussion on improving network robustness for RIM", 3GPP DRAFT; R1-1812883, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Spokane, USA; 20181112 - 20181116, 11 November 2018 (2018-11-11), Mobile Competence Centre ; 650, route des Lucioles ; F-06921 Sophia-Antipolis Cedex ; France, XP051554845
- SAMSUNG: "Mechanisms for identifying strong gNB interferers", 3GPP DRAFT; R1-1808786 MECHAISMS FOR IDENTIFYING STRONG GNB INTERFERERS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Gothenburg, Sweden; 20180820 - 20180824, 11 August 2018 (2018-08-11), Mobile Competence Centre ; 650, route des Lucioles ; F-06921 Sophia-Antipolis Cedex ; France, XP051516159

## Description

### TECHNICAL FIELD

This application relates to the field of wireless communication technologies, and in particular, to a signal sending and detection method and a related apparatus.

### BACKGROUND

Atmospheric duct is a natural phenomenon that occurs in specific meteorological and geographical conditions. Radio electromagnetic waves can be transmitted beyond a line of sight in the atmospheric duct with small signal attenuation. In a time division duplexing (time division duplexing, TDD) system, the atmospheric duct phenomenon enables a downlink radio signal of a remote base station to be propagated far, and a propagation distance of the downlink radio signal exceeds a protection distance of an uplink/downlink guard period in the TDD system. Consequently, the downlink radio signal of the remote base station interferes with an uplink radio signal of a local base station, causing interference to the uplink signal of the local base station.

Remote interference source detection is a unique effective method for atmospheric duct detection. One base station sends a characteristic sequence signal, and another base station detects the characteristic sequence signal according to a corresponding detection rule, to identify a remote interference source (for example, a remote base station). In the TDD system, generally, a characteristic sequence signal of each network standard is independently sent and identified by a base station of the network standard.

Because spectrum resources are limited, the spectrum resources are shared between systems of various network standards (for example, LTE and NR). For a base station, in a conventional remote interference source detection solution, if a characteristic sequence signal on a shared spectrum resource at a current moment is of another network standard, the base station cannot detect a characteristic sequence signal of a network standard of the base station on the shared spectrum resource at the current moment. Consequently, a quantity of characteristic sequence signals detected by the base station is reduced, and therefore accuracy of identifying a remote interference source is reduced, or even the remote interference source cannot be identified.

"Interference management for dynamic TDD and flexible duplex", 3GPP DRAFT; R1-1608790 discloses that in LTE TDD eIMTA, the interference management solutions specific to the cross-link interference were studied and specified. The cross-link interference issues and solutions identified in LTE TDD eIMTA could applied directly the in interference mitigation study for NR dynamic TDD and flexible duplex. The reference signal design in NR should support identification of cross-link interference and interference source.

"Interference management for dynamic TDD and flexible duplex", 3GPP DRAFT; R1-1702113 also discloses that in the long termed based measurement, the gNB measures the statistical interference level and based on which the cross-link interference can be handled. The simplest way is gNB measures the total received interference, similar as the Received Interference Power measurement defined in LTE. New gNB measurement should be defined in NR to identify the interference link direction and source. NR reference signal design should allow gNB to identify the interference source.

### SUMMARY

To resolve the foregoing technical problems, embodiments of this application provide a signal sending and detection method and a related apparatus, to improve accuracy of identifying a remote interference source. Details about solutions are as follows.

The present invention is as defined in the appended set of claims.

According to a first aspect, an embodiment of this application provides a signal sending method, including: A sending apparatus generates characteristic sequence signals corresponding to a plurality of time division duplexing TDD network standards, where the characteristic sequence signal is used for remote interference detection; and the sending apparatus sends the characteristic sequence signals in a spatial multiplexing manner. In the technical solution of the first aspect, the sending apparatus generates characteristic sequence signals of different TDD network standards, to perform remote interference detection. The sending apparatus sends the characteristic sequence signals in the spatial multiplexing manner, so that a network device of any TDD network standard can detect a characteristic sequence signal corresponding to a corresponding TDD network standard. This avoids that a quantity of characteristic sequence signals detected by a receive end is reduced because a network standard of a characteristic sequence signal of a transmit end is different from a network standard of a characteristic sequence signal of the receive end, thereby improving accuracy of identifying a remote interference source.

In a possible implementation of the first aspect, the TDD network standard includes a time division duplexing long term evolution TDD-LTE standard and a time division duplexing new radio TDD-NR standard. According to the first aspect, the characteristic sequence signals may be sent on a public frequency band, and the public frequency band is a spectrum resource shared by the plurality of TDD network standards. In other words, the characteristic sequence signals may be carried on the public frequency band. Optionally, the public frequency band may include a common spectrum resource between an NR bandwidth spectrum resource and an LTE bandwidth spectrum resource.

In a possible implementation of the first aspect, the method further includes: the sending apparatus stops service scheduling on a time unit that corresponds to the characteristic sequence signal and that is in the public frequency band. Optionally, the time unit may include an orthogonal frequency division multiplexing OFDM symbol. It is easy to understand that stopping the service scheduling on the time unit that corresponds to the characteristic sequence signal and that is in the public frequency band can avoid interference caused by the characteristic sequence signal to the service scheduling.
According to a second aspect, an embodiment of this application provides a signal detection method, including: A receiving apparatus receives characteristic sequence signals corresponding to a plurality of time division duplexing TDD network standards, where the characteristic sequence signal is used for remote interference detection; and the receiving apparatus detects the characteristic sequence signals based on the plurality of TDD network standards. In the foregoing technical solution of the second aspect, the receiving apparatus receives the characteristic sequence signals corresponding to the plurality of TDD network standards, and detects the characteristic sequence signals based on the plurality of TDD network standards corresponding to the plurality of characteristic sequence signals. This can avoid that, when the receiving apparatus detects the characteristic sequence signal by using a single TDD network standard, a quantity of characteristic sequence signals detected by the receiving apparatus is reduced or even no characteristic sequence signal is detected because a TDD network standard of a characteristic sequence signal is different from the TDD network standard that can be detected by the receiving apparatus, thereby improving accuracy of identifying a remote interference source.

In a possible implementation of the second aspect, the TDD network standard includes a time division duplexing long term evolution TDD-LTE standard and a time division duplexing new radio TDD-NR standard.

According to the second aspect, the characteristic sequence signals is received or detected on a public frequency band, and the public frequency band is a spectrum resource shared by the plurality of TDD network standards. In other words, the characteristic sequence signals may be carried on the public frequency band. Optionally, the public frequency band may include a common spectrum resource between an NR bandwidth spectrum resource and an LTE bandwidth spectrum resource.

According to a third aspect, an embodiment of this application provides a sending apparatus, including a processing module and a sending module. The processing module is configured to generate characteristic sequence signals corresponding to a plurality of time division duplexing TDD network standards, where the characteristic sequence signal is used for remote interference detection. The sending module is configured to send the characteristic sequence signals in a spatial multiplexing manner.

An implementation and beneficial effects corresponding to the sending apparatus in the third aspect are similar to an implementation and beneficial effects of the signal sending method according to the first aspect. For specific descriptions thereof, refer to related descriptions in the first aspect. Details are not described herein again.

According to a fourth aspect, an embodiment of this application provides a receiving apparatus, including a receiving module and a processing module. The receiving module is configured to receive characteristic sequence signals corresponding to a plurality of time division duplexing TDD network standards, and the characteristic sequence signal is used for remote interference detection. The processing module is configured to detect the characteristic sequence signals based on the plurality of TDD network standards.

An implementation and beneficial effects corresponding to the receiving apparatus in the fourth aspect are similar to an implementation and beneficial effects of the signal detection method according to the second aspect. For specific descriptions thereof, refer to related descriptions in the second aspect. Details are not described herein again.

According to a fifth aspect, an embodiment of this application provides a sending apparatus, including a processor. The processor is coupled to a memory, and the memory is configured to store instructions. The processor is configured to invoke the instructions to perform the method according to any one of the first aspect or the possible implementations of the first aspect. Optionally, the sending apparatus may further include a memory, a transmitter, and a receiver.

According to a sixth aspect, an embodiment of this application provides a receiving apparatus, including a processor. The processor is coupled to a memory, and the memory is configured to store instructions. The processor is configured to invoke the instructions to perform the method according to any one of the second aspect or the possible implementations of the second aspect. Optionally, the receiving apparatus may further include a memory, a transmitter, and a receiver.

According to a seventh aspect, an embodiment of this application provides a computer program product including instructions. When the computer program product runs on a computer, the computer is enabled to perform the method according to the first aspect.

According to an eighth aspect, an embodiment of this application provides a computer program product including instructions. When the computer program product runs on a computer, the computer is enabled to perform the method according to the second aspect.

According to a ninth aspect, an embodiment of this application provides a computer-readable storage medium. The computer-readable storage medium stores instructions. When the instructions are run on a computer, the computer is enabled to perform the method according to the first aspect.

According to a tenth aspect, an embodiment of this application provides a computer-readable storage medium. The computer-readable storage medium stores instructions. When the instructions are run on a computer, the computer is enabled to perform the method according to the second aspect.

### BRIEF DESCRIPTION OF DRAWINGS

FIG. 1 is a schematic diagram of a structure of a system framework according to an embodiment of this application;
FIG. 2 is a schematic diagram of an embodiment of a signal sending and detection method according to an embodiment of this application;
FIG. 3 is a schematic diagram of a structure of a sending apparatus according to an embodiment of this application;
FIG. 4 is a schematic diagram of a structure of a receiving apparatus according to an embodiment of this application;
FIG. 5 is a schematic diagram of another structure of a sending apparatus according to an embodiment of this application; and
FIG. 6 is a schematic diagram of another structure of a receiving apparatus according to an embodiment of this application.

### DESCRIPTION OF EMBODIMENTS

Embodiments of this application provide a signal sending and detection method and a related apparatus, to improve accuracy of identifying a remote interference source.

The following describes embodiments of this application with reference to the accompanying drawings.

In the specification, claims, and accompanying drawings of this application, the terms "first", "second", and the like are intended to distinguish between similar objects but do not necessarily indicate a specific order or sequence. It should be understood that the terms used in such a way are interchangeable in proper circumstances, and this is merely a discrimination manner for describing objects having a same attribute in embodiments of this application. In addition, the terms "include", "have" and any other variants thereof mean to cover non-exclusive inclusion, so that a process, method, system, product, or device that includes a series of units is not necessarily limited to those units, but may include other units not expressly listed or inherent to such a process, method, product, or device.

The technical solutions in embodiments of this application may be applied to various communication systems for data processing, for example, code division multiple access (code division multiple access, CDMA), time division multiple access (time division multiple access, TDMA), frequency division multiple access (frequency division multiple access, FDMA), orthogonal frequency division multiple access (orthogonal frequency division multiple access, OFDMA), single carrier frequency division multiple access (single carrier FDMA, SC-FDMA), and other systems. Terms "system" and "network" are interchangeable. The CDMA system may implement wireless technologies such as universal terrestrial radio access (universal terrestrial radio access, UTRA) and CDMA2000. The UTRA may include a wideband CDMA (wideband CDMA, WCDMA) technology and another variant technology of CDMA. CDMA2000 may cover the interim standard (interim standard, IS) 2000 (IS-2000), the IS-95 standard, and the IS-856 standard. The TDMA system may implement wireless technologies such as a global system for mobile communications (global system for mobile communications, GSM). The OFDMA system may implement wireless technologies such as evolved universal terrestrial radio access (evolved UTRA, E-UTRA), ultra mobile broadband (ultra mobile broadband, UMB), IEEE 802.11 (Wi-Fi), IEEE 802.16 (WiMAX), IEEE 802.20, and Flash OFDMA. The UTRA corresponds to a UMTS, and the E-UTRA corresponds to an evolved version of the UMTS. A new version of the UMTS that uses the E-UTRA is used in long term evolution (long term evolution, LTE) and various versions evolved based on LTE in 3GPP. A 5th generation (5th Generation, "5G" for short) communication system or new radio (New Radio, "NR" for short) is a next generation communication system under study. In addition, the communication system is further applicable to a future-oriented communication technology, and is applicable to the technical solutions provided in embodiments of this application. A system architecture and a service scenario described in embodiments of this application are intended to describe the technical solutions in embodiments of this application more clearly, and constitute no limitation on the technical solutions provided in embodiments of this application. A person of ordinary skill in the art may know that with evolution of a network architecture and emergence of a new service scenario, the technical solutions provided in embodiments of this application are also applicable to similar technical problems.

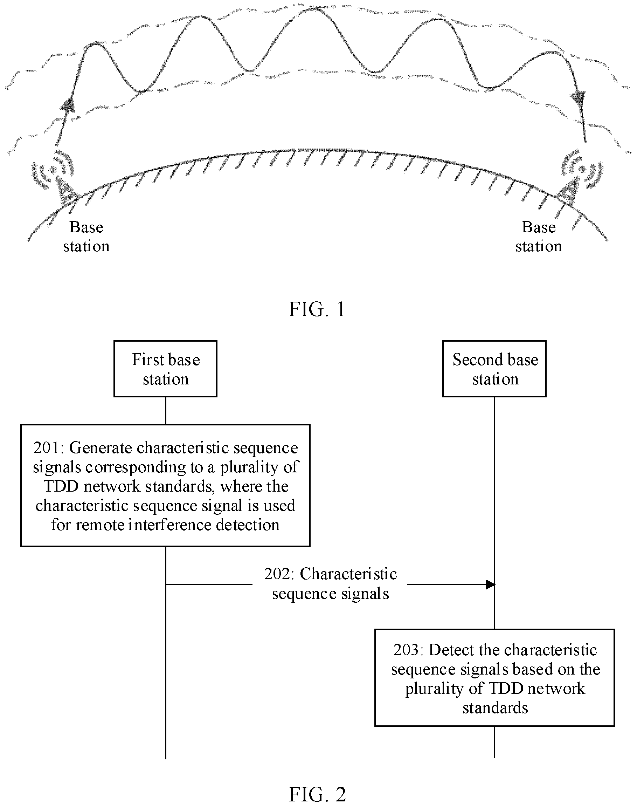

FIG. 1 shows a communication system framework to which a signal sending and detection method is applicable according to an embodiment of this application. As shown in FIG. 1, two base stations are included. One base station sends a characteristic sequence signal corresponding to remote interference detection to the other base station, and the other base station performs remote interference detection on the characteristic sequence signal according to a corresponding detection rule, to determine whether a remote interference source exists. The two base stations support LTE or NR in independently sending a characteristic sequence signal of an LTE or NR network standard. When detecting the characteristic sequence signals, the base station supports independent detection of the LTE and NR network standards in a same frequency band, for example, a time division duplexing long term evolution (time division duplexing long term evolution, TDD-LTE) standard and a time division duplexing new radio (time division duplexing new radio, TDD-NR) standard. It should be noted that the remote interference detection in this application may be atmospheric duct detection. Correspondingly, the remote interference source may be an atmospheric duct characteristic interference source, and a corresponding characteristic sequence signal may be a dedicated atmospheric duct characteristic sequence signal.

The technical solutions in embodiments of this application are particularly applicable to a spectrum sharing scenario. The spectrum sharing scenario means that a same frequency band may be jointly used by network systems of a plurality of network standards. For example, because spectrum resources are limited, a part of an existing LTE frequency band in an LTE system is shared with an NR system for use. The shared frequency band may be jointly used by the LTE system and the NR system, that is, the LTE system and the NR system share the spectrum resources.

To facilitate understanding of the technical solutions in embodiments of this application, the following provides detailed descriptions with reference to specific embodiments.

FIG. 2 is a schematic diagram of an embodiment of a signal sending and detection method according to an embodiment of this application. In this embodiment of this application, a sending apparatus and a receiving apparatus each may be a base station or a corresponding functional network element inside a base station. In the following embodiments, an example in which the sending apparatus and the receiving apparatus each are a base station is used for description.

As shown in FIG. 2, the embodiment of the signal sending and detection method according to this embodiment of this application includes the following steps.

201: A first base station generates characteristic sequence signals corresponding to a plurality of TDD network standards, where the characteristic sequence signal is used for remote interference detection.

The TDD network standard refers to a type of a TDD network. Specifically, the TDD network standard may include a TDD-LTE standard and a TDD-NR standard. The characteristic sequence signal is a characteristic sequence dedicated for remote interference detection. For example, the characteristic sequence signal may be a remote interference management reference signal (remote interference management reference signal, RIM-RS), and is used to detect a remote interference source.

That the first base station generates the plurality of characteristic sequence signals may include: The first base station generates an RIM-RS based on the TDD-NR standard, or the first base station generates an RIM-RS based on the TDD-LTE standard.

For example, in a spectrum sharing scenario, a spectrum resource of a continuous 100 MHz bandwidth is used by the first base station and the second base station, the first base station uses an NR bandwidth of 80 MHz and an LTE bandwidth of 20 MHz, and the second base station uses an NR bandwidth of 60 MHz and an LTE bandwidth of 40 MHz. In this case, 20 MHz in the continuous 100 MHz bandwidth is shared by the first base station and the second base station. Optionally, an NR system of the first base station and an NR system of the second base station generate characteristic sequence RIM-RSs within the bandwidth of 80 MHz based on the TDD-NR standard, and an LTE system of the first base station and an LTE system of the second base station generate characteristic sequence RIM-RSs within the bandwidth of 20 MHz×2 based on the TDD-LTE standard. Optionally, an NR system of the first base station and an NR system of the second base station generate characteristic sequence RIM-RSs within the bandwidth of 60 MHz based on the TDD-NR standard, and an LTE system of the first base station and an LTE system of the second base station generate characteristic sequence RIM-RSs within the bandwidth of 20 MHz×2 based on the TDD-LTE standard. Optionally, an NR system of the first base station and an NR system of the second base station generate characteristic sequence RIM-RSs within the bandwidth of 80 MHz based on the TDD-NR standard, and an LTE system of the first base station and an LTE system of the second base station separately generate characteristic sequence RIM-RSs within the bandwidths of 20 MHz and 20 MHz×2 based on the TDD-LTE standard. It should be noted that the RIM-RSs within the bandwidth of 80 MHz may be RIM-RSs within a part or all of the bandwidth of 80 MHz. For example, the RIM-RSs within the bandwidth of 80 MHz may be RIM-RSs within a bandwidth of 60 MHz or 50 MHz, or may be RIM-RSs within the bandwidth of 80 MHz. Similarly, the RIM-RSs in the bandwidth of 20 MHz×2, the RIM-RSs in the bandwidth of 60 MHz, and the RIM-RSs in the bandwidth of 20 MHz all may be RIM-RSs in a part or all of the corresponding bandwidths.

202: The first base station sends the characteristic sequence signals to the second base station in a spatial multiplexing manner.

When a sending moment corresponding to the characteristic sequence signals arrives, the first base station sends the plurality of characteristic sequence signals in the spatial multiplexing manner. The characteristic sequence signals is sent on a public frequency band, and the public frequency band is a spectrum resource shared by the plurality of TDD network standards. In other words, the characteristic sequence signals may be carried on the public frequency band. Optionally, the public frequency band may include a common spectrum resource between an NR bandwidth spectrum resource and an LTE bandwidth spectrum resource.

Specifically, if only a characteristic sequence signal of the TDD-LTE standard is sent at a current sending moment, the first base station sends the characteristic sequence signal of the TDD-LTE standard to the second base station within a shared bandwidth in the spatial multiplexing manner. For example, the first base station sends, to the second base station within the bandwidth of 20 MHz shared by the first base station and the second base station, the characteristic sequence RIM-RS that is within the bandwidth of 20 MHz or 20 MHz×2 and that corresponds to the TDD-LTE standard. Optionally, the first base station and the second base station stop service scheduling on a time unit, for example, an OFDM symbol, corresponding to the characteristic sequence RIM-RS that is within the bandwidth of 20 MHz or 20 MHz×2 and that corresponds to the TDD-LTE standard, within the bandwidth of 20 MHz shared by the first base station and the second base station.

If only a characteristic sequence signal of the TDD-NR standard is sent at a current sending moment, the first base station sends the characteristic sequence signal of the TDD-NR standard to the second base station within a shared bandwidth in the spatial multiplexing manner. For example, the first base station sends, to the second base station within the bandwidth of 20 MHz shared by the first base station and the second base station, the characteristic sequence RIM-RS that is within the bandwidth of 60 MHz or 80 MHz and that corresponds to the TDD-NR standard. Optionally, the first base station and the second base station stop service scheduling on a time unit, for example, an OFDM symbol, corresponding to the characteristic sequence RIM-RS that is within the bandwidth of 60 MHz or 80 MHz and that corresponds to the TDD-NR standard, within the bandwidth of 20 MHz shared by the first base station and the second base station.

If both a characteristic sequence signal of the TDD-LTE standard and a characteristic sequence signal of the TDD-NR standard are sent at a current sending moment, the first base station sends the characteristic sequence signal of the TDD-LTE standard and the characteristic sequence signal of the TDD-NR standard to the second base station within a shared bandwidth in the spatial multiplexing manner. For example, the first base station sends, to the second base station within the bandwidth of 20 MHz shared by the first base station and the second base station, the characteristic sequence RIM-RS that is within the bandwidth of 20 MHz or 20 MHz×2 and that corresponds to the TDD-LTE standard, and sends the characteristic sequence RIM-RS that is within the bandwidth of 60 MHz or 80 MHz and that corresponds to the TDD-NR standard. Optionally, the first base station and the second base station stop service scheduling on both a time unit, for example, an OFDM symbol, corresponding to the characteristic sequence RIM-RS that is within the bandwidth of 20 MHz or 20 MHz×2 and that corresponds to the TDD-LTE standard and a time unit, for example, an OFDM symbol, corresponding to the characteristic sequence RIM-RS that is within the bandwidth of 60 MHz or 80 MHz and that corresponds to the TDD-NR standard, within the bandwidth of 20 MHz shared by the first base station and the second base station.

It should be noted that the manner of sending the characteristic sequence signals is not only applicable to a shared frequency band of the NR system and the LTE system, but also applicable to a frequency band independently occupied by the LTE system, namely, an LTE only frequency band, and applicable to a frequency band independently occupied by the NR system, namely, an NR only frequency band.

203: The second base station detects the characteristic sequence signals based on the plurality of TDD network standards.

As described above, the TDD network standard includes the TDD-LTE standard and the TDD-NR standard. That the second base station detects the characteristic sequence signals based on the plurality of TDD network standards may include: The second base station performs remote interference detection on the characteristic sequence signals based on the TDD-LTE standard and/or the TDD-NR standard, to determine whether an atmospheric duct interference source exists. It should be noted that for a specific detection manner of the remote interference detection, refer to descriptions in other related documents. Details are not described herein again.

Specifically, that the second base station performs remote interference detection on the characteristic sequence signals based on the TDD-LTE standard may include: If a current detection frequency band is an LTE only frequency band, the second base station performs remote interference detection on the characteristic sequence signals (for example, the RIM-RSs) based on the TDD-LTE standard.

That the second base station performs remote interference detection on the characteristic sequence signals based on the TDD-NR standard may include: If a current detection frequency band is an NR only frequency band, the second base station performs remote interference detection on the characteristic sequence signals (for example, the RIM-RSs) based on the TDD-NR standard.

That the second base station performs remote interference detection on the characteristic sequence signals based on the TDD-LTE standard and the TDD-NR standard may include: If a current detection frequency band is the shared frequency band of the LTE system and the NR system, the second base station performs remote interference detection on the characteristic sequence signals (for example, the RIM-RSs) based on the TDD-LTE standard and the TDD-NR standard.

It should be noted that, regardless of whether the current detection frequency band is the LTE only frequency band, the NR only frequency band, or the shared frequency band, the second base station may perform remote interference detection on the characteristic sequence signals (for example, the RIM-RSs) based on the TDD-LTE standard and the TDD-NR standard. This is not limited in this application. In this embodiment of this application, in the spectrum sharing scenario, the characteristic sequence signals corresponding to the plurality of TDD network standards are generated and sent, and the characteristic sequence signals are detected based on the plurality of TDD network standards corresponding to the plurality of characteristic sequence signals. This can avoid that, when the receiving apparatus detects the characteristic sequence signals by using a single TDD network standard, a quantity of characteristic sequence signals detected by the receiving apparatus is reduced or even no characteristic sequence signal is detected because the TDD network standard of the characteristic sequence signal is different from the TDD network standard that can be detected by the receiving apparatus, thereby improving accuracy of identifying the remote interference source.

Further, according to the technical solution in this embodiment of this application, mutual detection of LTE and NR remote interference sources, namely, remote base stations, can be implemented, without affecting an LTE atmospheric duct interference source detection solution on a live network. After an LTE spectrum resource is shared with NR, the NR remote interference source can be identified, to maximize accurate interference source identification.

It should be noted that for ease of brief description, the foregoing method embodiments are represented as a series of actions. However, a person skilled in the art should appreciate that this application is not limited to the described order of the actions, because according to this application, some steps may be performed in other orders or simultaneously. In addition, a person skilled in the art should also appreciate that embodiments described in this specification all belong to example embodiments, and the related actions and modules are not necessarily required by this application.

To better implement the foregoing solutions in embodiments of this application, the following further provides a related apparatus for implementing the foregoing solutions.

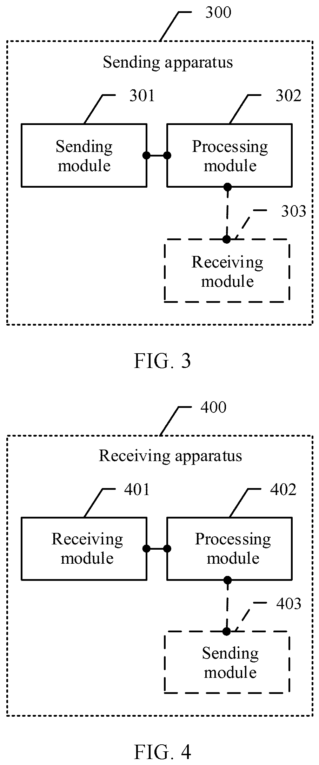

FIG. 3 is a schematic diagram of a structure of a sending apparatus according to an embodiment of this application. A sending apparatus 300 includes a sending module 301 and a processing module 302. The processing module 302 is configured to generate characteristic sequence signals corresponding to a plurality of time division duplexing TDD network standards, where the characteristic sequence signal is used for remote interference detection. The sending module 301 is configured to send the characteristic sequence signals in a spatial multiplexing manner. Optionally, the sending apparatus 300 may further include a receiving module 303.

In some embodiments of this application, the TDD network standard includes a time division duplexing long term evolution TDD-LTE standard and a time division duplexing new radio TDD-NR standard.

According to this application, the characteristic sequence signals are sent on a public frequency band, and the public frequency band is a spectrum resource shared by the plurality of TDD network standards.

In some embodiments of this application, the processing module 302 is further configured to stop service scheduling on a time unit that corresponds to the characteristic sequence signal and that is in the public frequency band.

It should be noted that the sending apparatus 300 may be specifically the first base station in the foregoing method embodiment, and the sending module 301, the processing module 302, and the receiving module 303 of the sending apparatus 300 may be configured to perform all operations performed by the first base station in the foregoing method embodiment.

FIG. 4 is a schematic diagram of a structure of a receiving apparatus according to an embodiment of this application. A receiving apparatus 400 includes a receiving module 401 and a processing module 402. The receiving module 401 is configured to receive characteristic sequence signals corresponding to a plurality of time division duplexing TDD network standards, where the characteristic sequence signal is used for remote interference detection. The processing module 402 is configured to detect the characteristic sequence signals based on the plurality of TDD network standards. Optionally, the receiving apparatus 400 may further include a sending module 403.

In some embodiments of this application, the TDD network standard includes a time division duplexing long term evolution TDD-LTE standard and a time division duplexing new radio TDD-NR standard.

According to this application, the characteristic sequence signals are received or detected on a public frequency band, and the public frequency band is a spectrum resource shared by the plurality of TDD network standards.

It should be noted that the receiving apparatus 400 may be specifically the second base station in the foregoing method embodiment, and the receiving module 401, the processing module 403, and the sending module 403 of the receiving apparatus 400 may be configured to perform all operations performed by the second base station in the foregoing method embodiment.

It should be noted that content such as information exchange between the modules/units of the apparatus and the execution processes thereof is based on a same concept as the method embodiment of this application, and achieves same technical effects as the method embodiment of this application. For specific content, refer to the foregoing description in the method embodiment of this application. Details are not described herein again.

An embodiment of this application further provides a computer storage medium. The computer storage medium stores a program. The program is executed to perform some or all of the steps recorded in the method embodiment.

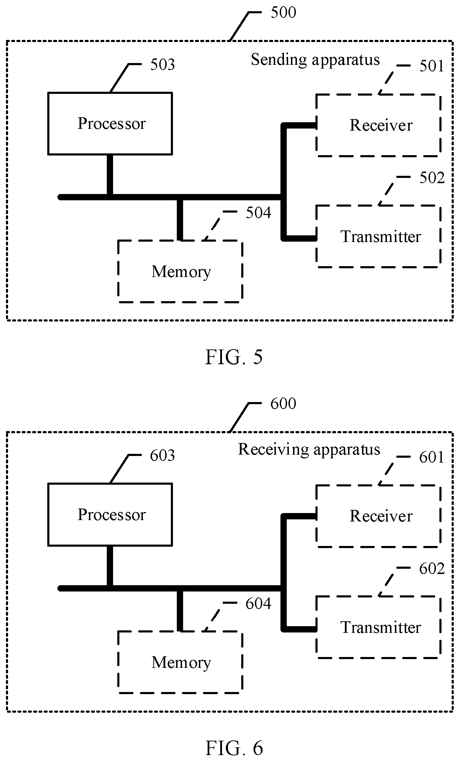

The following describes another sending apparatus provided in an embodiment of this application. Refer to FIG. 5. A sending apparatus 500 includes a processor 503. There may be one or more processors 503 in the sending apparatus 500. In FIG. 5, one processor is used as an example. Optionally, the sending apparatus 500 may further include a receiver 501, a transmitter 502, and a memory 504.

In some embodiments of this application, the receiver 501, the transmitter 502, the processor 503, and the memory 504 may be connected through a bus or in another manner, and a connection through the bus is used as example in FIG. 5.

The memory 504 may include a read-only memory and a random access memory, and provide an instruction and data for the processor 503. A part of the memory 504 may further include a non-volatile random access memory (non-volatile random access memory, NVRAM). The memory 504 stores an operating system and operation instructions, an executable module or a data structure, a subset thereof, or an extended set thereof. The operation instructions may include various operation instructions, used to implement various operations. The operating system may include various system programs, to implement various basic services and process hardware-based tasks.

The processor 503 controls an operation of the sending apparatus, and the processor 503 may also be referred to as a central processing unit (central processing unit, CPU). In a specific application, components of the sending apparatus are coupled together through a bus system. In addition to a data bus, the bus system may further include a power bus, a control bus, a status signal bus, and the like. However, for clear description, various types of buses in the figure are referred to as the bus system.

The method disclosed in the foregoing embodiment of this application may be applied to the processor 503, or may be implemented by the processor 503. The processor 503 may be an integrated circuit chip and has a signal processing capability. In an implementation process, steps of the foregoing method may be completed by using a hardware integrated logic circuit in the processor 503 or by using instructions in a form of software. The processor 503 may be a general-purpose processor, a digital signal processor (digital signal processor, DSP), an application-specific integrated circuit (application-specific integrated circuit, ASIC), a field-programmable gate array (field-programmable gate array, FPGA) or another programmable logic component, discrete gate or transistor logic component, or a discrete hardware component. The processor 503 may implement or perform the methods, the steps, and logical block diagrams that are disclosed in embodiments of this application. The general-purpose processor may be a microprocessor, or the processor may be any conventional processor or the like. The steps in the method disclosed with reference to embodiments of this application may be directly performed and completed by a hardware decoding processor, or may be performed and completed by using a combination of hardware in a decoding processor and a software module. The software module may be located in a mature storage medium in the art, for example, a random access memory, a flash memory, a read-only memory, a programmable read-only memory, an electrically erasable programmable memory, or a register. The storage medium is located in the memory 504, and the processor 503 reads information in the memory 504, and completes the steps in the foregoing method in combination with hardware in the processor 503.

The receiver 501 may be configured to: receive entered digital or character information, and generate a signal input related to a related setting and function control of the sending apparatus. The transmitter 502 may include a display device, for example, a display. The transmitter 502 may be configured to output digital or character information through an external interface.

In this embodiment of this application, the processor 503 is configured to perform the signal sending method performed by the first base station.

The following describes another receiving apparatus provided in an embodiment of this application. Refer to FIG. 6. A receiving apparatus 600 includes a processor 603. There may be one or more processors 603 in the receiving apparatus 600. In FIG. 6, one processor is used as an example. Optionally, receiving apparatus 600 may further include a receiver 601, a transmitter 602, and a memory 604.

In some embodiments of this application, the receiver 601, the transmitter 602, the processor 603, and the memory 604 may be connected through a bus or in another manner, and a connection through the bus is used as example in FIG. 6.

The memory 604 may include a read-only memory and a random access memory, and provide an instruction and data for the processor 603. A part of the memory 604 may further include a non-volatile random access memory (non-volatile random access memory, NVRAM). The memory 604 stores an operating system and operation instructions, an executable module or a data structure, a subset thereof, or an extended set thereof. The operation instructions may include various operation instructions to implement various operations. The operating system may include various system programs, to implement various basic services and process hardware-based tasks.

The processor 603 controls an operation of the receiving apparatus, and the processor 603 may also be referred to as a central processing unit (central processing unit, CPU). In a specific application, components of the receiving apparatus are coupled together through a bus system. In addition to a data bus, the bus system may further include a power bus, a control bus, a status signal bus, and the like. However, for clear description, various types of buses in the figure are referred to as the bus system.

The method disclosed in the foregoing embodiment of this application may be applied to the processor 603, or may be implemented by the processor 603. The processor 603 may be an integrated circuit chip and has a signal processing capability. In an implementation process, steps of the foregoing method may be completed by using a hardware integrated logic circuit in the processor 603, or by using instructions in a form of software. The processor 603 may be a general-purpose processor, a digital signal processor (digital signal processor, DSP), an application-specific integrated circuit (application-specific integrated circuit, ASIC), a field-programmable gate array (field-programmable gate array, FPGA) or another programmable logic component, discrete gate or transistor logic component, or a discrete hardware component. The processor may implement or perform the methods, the steps, and logical block diagrams that are disclosed in embodiments of this application. The general-purpose processor may be a microprocessor, or the processor may be any conventional processor or the like. The steps in the method disclosed with reference to embodiments of this application may be directly performed and completed by a hardware decoding processor, or may be performed and completed by using a combination of hardware in a decoding processor and a software module. The software module may be located in a mature storage medium in the art, for example, a random access memory, a flash memory, a read-only memory, a programmable read-only memory, an electrically erasable programmable memory, or a register. The storage medium is located in the memory 604, and the processor 603 reads information in the memory 604, and completes the steps in the foregoing method in combination with hardware of the processor 603.

The receiver 601 may be configured to: receive entered digital or character information, and generate a signal input related to a related setting and function control of the receiving apparatus. The transmitter 602 may include a display device, for example, a display. The transmitter 602 may be configured to output digital or character information through an external interface.

In this embodiment of this application, the processor 603 is configured to perform the signal detection method performed by the second base station.

In addition, it should be noted that the described apparatus embodiments are merely examples. The units described as separate parts may or may not be physically separate, and parts displayed as units may or may not be physical units, and may be located in one position, or may be distributed on a plurality of network units. Some or all the modules may be selected based on an actual requirement to achieve the objectives of the solutions of embodiments. In addition, in the accompanying drawings of the apparatus embodiments provided in this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or by dedicated hardware, including an application-specific integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be of various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, for example, a floppy disk, a USB flash drive, a removable hard disk, a ROM, a RAM, a magnetic disk, or an optical disc of a computer, and includes several instructions for instructing a computer device (which may be a personal computer, a server, a network device, or the like) to perform the method described in embodiments of this application.

All or some of the foregoing embodiments may be implemented by software, hardware, firmware, or any combination thereof. When software is used to implement the embodiments, all or some of the embodiments may be implemented in a form of a computer program product.

The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

The scope of protection of the invention is limited by the appended claims.

## Claims

1. A signal sending method, comprising:
generating (201), by a sending apparatus, characteristic sequence signals corresponding to a plurality of time division duplexing, TDD, network standards, wherein the characteristic sequence signal is used for remote interference detection; and
sending (202), by the sending apparatus, the characteristic sequence signals in a spatial multiplexing manner, wherein the characteristic sequence signals are sent on a public frequency band, and the public frequency band is a spectrum resource shared by the plurality of TDD network standards.

2. The method according to claim 1, wherein the TDD network standard comprises a time division duplexing long term evolution, TDD-LTE, standard and a time division duplexing new radio, TDD-NR, standard.

3. The method according to claim 1 or 2, wherein the method further comprises:
stopping, by the sending apparatus, service scheduling on a time unit that corresponds to the characteristic sequence signal and that is in the public frequency band.

4. A signal detection method, comprising:
receiving, by a receiving apparatus, characteristic sequence signals corresponding to a plurality of time division duplexing, TDD, network standards, wherein the characteristic sequence signal is used for remote interference detection, wherein the characteristic sequence signals are received on a public frequency band, and the public frequency band is a spectrum resource shared by the plurality of TDD network standards; and
detecting, by the receiving apparatus, the characteristic sequence signals based on the plurality of TDD network standards.

5. The method according to claim 4, wherein the TDD network standard comprises a time division duplexing long term evolution, TDD-LTE, standard and a time division duplexing new radio, TDD-NR, standard.

6. An apparatus, configured to perform the method according to any one of claims 1 to 3, or configured to perform the method according to any one of claims 4 and 5.

## Patentansprüche

1. Signalsendeverfahren, umfassend:
Erzeugen (201) charakteristischer Sequenzsignale entsprechend einer Vielzahl von Zeitduplex-Netzwerkstandards, TDD-Netzwerkstandards, durch eine Sendevorrichtung, wobei das charakteristische Sequenzsignal zur Ferninterferenzdetektion verwendet wird; und
Senden (202) der charakteristischen Sequenzsignale durch die Sendevorrichtung in einer räumlichen Multiplexweise, wobei die charakteristischen Sequenzsignale auf einem öffentlichen Frequenzband gesendet werden und das öffentliche Frequenzband eine Spektrumsressource ist, die durch die Vielzahl von TDD-Netzwerkstandards gemeinsam genutzt wird.

2. Verfahren nach Anspruch 1, wobei der TDD-Netzwerkstandard einen Zeitduplex-Langzeitevolutionsstandard, TDD-LTE-Standard, und einen neuen Zeitduplex-Funkstandard, TDD-NR-Standard, umfasst.

3. Verfahren nach Anspruch 1 oder 2, wobei das Verfahren ferner Folgendes umfasst:
Anhalten der Dienstplanung auf einer Zeiteinheit, die dem charakteristischen Sequenzsignal entspricht und die in dem öffentlichen Frequenzband liegt, durch die Sendevorrichtung.

4. Signaldetektionsverfahren, umfassend:
Empfangen charakteristischer Sequenzsignale entsprechend einer Vielzahl von Zeitduplex-Netzwerkstandards, TDD-Netzwerkstandards, durch eine Empfangsvorrichtung, wobei das charakteristische Sequenzsignal zur Ferninterferenzdetektion verwendet wird, wobei die charakteristischen Sequenzsignale in einem öffentlichen Frequenzband empfangen werden, und das öffentliche Frequenzband eine Spektrumsressource ist, die durch die Vielzahl von TDD-Netzwerkstandards gemeinsam genutzt wird; und
Detektieren der charakteristischen Sequenzsignale durch die Empfangsvorrichtung basierend auf der Vielzahl von TDD-Netzstandards.

5. Verfahren nach Anspruch 4, wobei der TDD-Netzwerkstandard einen Zeitduplex-Langzeitevolutionsstandard, TDD-LTE-Standard, und einen neuen Zeitduplex-Funkstandard, TDD-NR-Standard, umfasst.

6. Vorrichtung, die dazu konfiguriert ist, das Verfahren nach einem der Ansprüche 1 bis 3 durchzuführen, oder die dazu konfiguriert ist, das Verfahren nach einem der Ansprüche 4 und 5 durchzuführen.

## Revendications

1. Procédé d'envoi de signaux, comprenant :
la génération (201), par un appareil d'envoi, de signaux de séquence caractéristiques correspondant à une pluralité de normes de réseau de duplexage par répartition dans le temps, TDD, dans lequel le signal de séquence caractéristique est utilisé pour la détection d'interférences à distance ; et
l'envoi (202), par l'appareil d'envoi, des signaux de séquence caractéristiques de manière multiplexée spatialement, dans lequel les signaux de séquence caractéristiques sont envoyés sur une bande de fréquence publique, et la bande de fréquence publique est une ressource spectrale partagée par la pluralité de normes de réseau TDD.

2. Procédé selon la revendication 1, dans lequel la norme de réseau TDD comprend une norme d'évolution à long terme à duplexage par répartition dans le temps, TDD-LTE, et une norme de nouvelle radio à duplexage par répartition dans le temps, TDD-NR.

3. Procédé selon la revendication 1 ou 2, dans lequel le procédé comprend également :
l'arrêt, par l'appareil d'envoi, de la planification de service sur une unité de temps qui correspond au signal de séquence caractéristique et qui se trouve dans la bande de fréquence publique.

4. Procédé de détection de signaux, comprenant :
la réception, par un appareil de réception, de signaux de séquence caractéristiques correspondant à une pluralité de normes de réseau de duplexage par répartition dans le temps, TDD, dans lequel le signal de séquence caractéristique est utilisé pour la détection d'interférences à distance, dans lequel les signaux de séquence caractéristiques sont reçus sur une bande de fréquence publique, et la bande de fréquence publique est une ressource spectrale partagée par la pluralité de normes de réseau TDD ; et
la détection, par l'appareil de réception, des signaux de séquence caractéristiques sur la base de la pluralité des normes de réseau TDD.

5. Procédé selon la revendication 4, dans lequel la norme de réseau TDD comprend une norme d'évolution à long terme à duplexage par répartition dans le temps, TDD-LTE, et une norme de nouvelle radio à duplexage par répartition dans le temps, TDD-NR.

6. Appareil, configuré pour réaliser le procédé selon l'une quelconque des revendications 1 à 3, ou configuré pour réaliser le procédé selon l'une quelconque des revendications 4 et 5.
